# EUROPÄISCHE PATENTSCHRIFT

(11) **EP 3 015 249 B1**
(45) Veröffentlichungstag und Bekanntmachung des Hinweises auf die Patenterteilung: **28.02.2018**
(21) Anmeldenummer: 14003683.1
(22) Anmeldetag: 31.10.2014
(51) Int. Cl.: B29C 53/66, B29C 70/32, B29C 70/38

(54) **Ablegevorrichtung**
Support device
Dispositif de dépôt

(43) Veröffentlichungstag der Anmeldung: 04.05.2016
(73) Patentinhaber: Airbus Defence and Space GmbH, 85521 Ottobrunn (DE)
(72) Erfinder: Weimer, Christian, 81539 München (DE)
(74) Vertreter: Isarpatent

(56) Entgegenhaltungen:
- EP-A1- 2 322 342
- WO-A1-03/035380
- US-A1- 2005 039 843
- US-A1- 2005 247 396

## Beschreibung

Die Erfindung betrifft eine Ablegevorrichtung zur automatisierten Ablage von Fasergebilden auf einem Werkstück.

Faserverstärkte Faserverbundmaterialien werden zur Erzielung hoher Geschwindigkeiten in verstärktem Maße durch automatisiertes Ablegen von Fasergebilden hergestellt.

Die Flechttechnologie als ein Verfahren zum automatisierten Ablegen ermöglicht hohe Herstellungsgeschwindigkeiten, aber besitzt den Nachteil, dass komplexere Faserstrukturen, wie etwa Dickensprünge, das sogenannte Ply-Drop-off, also ein Enden von Faserschichten innerhalb des Bauteils aus Faserverbundmaterial, abweichend von einer Oberflächenlinie dreidimensional gekrümmte Faserschichten und Einspeißen einzelner Rovings oder Faserstränge damit nicht herstellbar sind.

Dokument US2005/247396 offenbart in Figur 1 eine Ablegevorrichtung zur automatisierten Ablage von Fasergebilden auf einem Werkstück. In der US2005/0039843A1 wird eine Mehrzahl von Ablegeeinheiten mit translatorischen und rotatorischen Freiheitsgraden beschrieben. Diese ist jedoch nicht in der Lage, eine Flechtablage zu realisieren.

Aufgabe der vorliegenden Erfindung, ist die Nachteile des Standes der Technik zu überwinden, insbesondere eine Ablegevorrichtung zur automatisierten Ablage von Fasergebilden vorzuschlagen, die mit hoher Geschwindigkeit und flexibel Bauteile auch komplexerer Faserstruktur fertigt.

Diese Aufgabe wird mit einer Ablegevorrichtung mit den Merkmalen des Patentanspruchs 1 gelöst.

Eine erfindungsgemäße Ablegevorrichtung zur automatisierten Ablage von Fasergebilden weist eine Mehrzahl von Stützelementen mit jeweils zumindest einem Legekopf auf. Der zumindest eine Legekopf ist ausgebildet, Fasergebilde auf dem Werkstück abzulegen. Dabei sind die Mehrzahl von Stützelementen und das Werkstück relativ zueinander in einer Umfangsrichtung des Werkstücks und in einer Längsrichtung des Werkstücks beweglich angeordnet.

Unter den Begriff "Fasergebilde" fallen im Rahmen der Erfindung sämtliche Geometrien von Fasern, die in eine Kunststoffmatrix eingebettet sind. Derartige Kunststoff-Faser-Gebilde beinhalten Rovings, Garne, UD-Komposite, Faserbänder, Prepregs oder ähnliche in der Faserverbundtechnologie übliche Halbzeuge.

Die erfindungsgemäße Ablegevorrichtung ermöglicht eine Vielzahl von herstellbaren Ablagegeometrien, wie etwa auch Flechtablagen, besitzt eine hohe Flexibilität, kann mit hohen Geschwindigkeiten Faserverbundstrukturen fertigen und ist einfach zu warten. Es lassen sich Faserspleiße herstellen, und Fiber-Steering wird möglich.

Bei einer Ausführungsform ist die Mehrzahl von Stützelementen eine Mehrzahl von Ringsegmenten. Diese Geometrie ermöglicht eine besonders gute und einfache Beweglichkeit der Stützelemente und damit der Legeköpfe in Umfangsrichtung des Werkstücks.

Vorteilhaft kann die Mehrzahl von Stützelementen eine Mehrzahl von Linearführungen aufweisen. Insbesondere kann die Mehrzahl von Stützelementen aus einer Mehrzahl von Linearführungen bestehen.

Nach einem Aspekt der Erfindung ist die Mehrzahl von Stützelementen zumindest teilweise relativ zueinander in Längsrichtung und/oder in Umfangsrichtung des Werkstücks beweglich gelagert. Dies ermöglicht eine besonders hohe Flexibilität bei der Fertigung und die Möglichkeit der Fertigung komplexer Faserablagestrukturen, die auch eine Flechtablage nachbildet.

Nach einer weiteren Ausführungsform ist zumindest ein Teil der Mehrzahl von Stützelementen ringförmig um das Bauteil angeordnet. Besonders im Fall, dass die Stützelemente als Ringsegmente ausgeführt sind, aber auch sonst sind die Stützelemente dadurch besonders leicht in Umfangsrichtung des Werkstücks führbar.
Vorteilhaft kann zumindest ein Teil der Legeköpfe auf zumindest einem Teil der Stützelemente bezüglich eines Winkels radial zum Werkstück schwenkbar gelagert sein. Dadurch ist ein Ablegewinkel der Fasergebilde auf dem Werkstück variierbar. Besonders bei unregelmäßiger Oberfläche des Werkstücks kann dies vorteilhaft sein.
Nach einem Aspekt der Erfindung kann zumindest ein Legekopf derart ausgeführt sein, dass er gleichzeitig mehrere Fasergebilde auf dem Werkstück ablegen kann. Dies erhöht weiter die Flexibilität der Ablegevorrichtung und ihre Fertigungsgeschwindigkeit.

Nach einer weiteren Variante kann zumindest ein Teil der Stützelemente ein Array bilden. Dies kann vorteilhaft ermöglichen, dass mit der Ablegevorrichtung besonders komplexe Strukturen abgelegt werden. Insbesondere können nach Art einer Flechtanlage Fasergebilde, insbesondere Faserstränge oder -bänder, in Flechtstruktur auf dem Werkstück abgelegt werden.

Vorteilhaft kann eine Mehrzahl von Legeköpfen unabhängig voneinander ansteuerbar sein. Dadurch können einzelne Fasergebilde, wie etwa Rovings, individuell auf dem Bauteil an- und abgesetzt werden (Ply-Drop-off).

Bevorzugt weist zumindest ein Teil der Legeköpfe eine Schneidvorrichtung auf. Dadurch können Dickensprünge hergestellt werden.

Besonders bevorzugt weisen alle Legeköpfe eine Schneidvorrichtung auf. Dies erhöht weiter die Flexibilität der möglichen Faserablagestrukturen.

Es kann des Weiteren vorteilhaft sein, dass zumindest ein Teil der Legeköpfe und/oder zumindest ein Teil der der Stützelemente eine Materialzuführung zur Zuführung von Fasermaterial, insbesondere von Endlosfasermaterial, aufweist.

Nach einer Variante kann die Materialzuführung eine externe Materialzuführung sein und/oder von einem Gatter stammen.

Des Weiteren kann zusätzlich zur beweglichen Lagerung der Stützelemente und/oder alternativ dazu das Werkstück in Längsrichtung und/oder Umfangsrichtung beweglich gelagert sein. Auch dies trägt zur Flexibilität des Herstellverfahrens mit der Ablegevorrichtung bei. Insbesondere müssen somit die Stützelemente nicht in Umfangsrichtung um das Werkstück laufen, so dass die Materialzuführung von einem Gatter, insbesondere von einem Standardgatter erfolgen kann.

Nach einem Aspekt der Erfindung kann vorgesehen sein, dass zumindest ein Teil der Stützelemente derart gelagert ist, dass er individuell entnommen werden kann. Dies kann beispielsweise die Wartung und Reinigung der Stützelemente und damit der Legeköpfe erleichtern.

Nach einem weiteren Aspekt kann zumindest ein Teil der Stützelemente in eine Nicht-Betriebsstellung fahrbar sein. Dies kann den Vorteil haben, dass das jeweilige Stützelement die restlichen Stützelemente nicht behindert, so dass diese auch bei einer Wartung eines Stützelements bzw. Legekopfes im üblichen Betrieb fahrbar sind. Des Weiteren kann es hilfreich sein, dass Stützelemente in einer Nicht-Betriebsstellung leichter entnehmbar und somit wartbar, d.h auch reinigbar sind.

Sonstige vorteilhafte Ausführungsformen der vorliegenden Erfindung sind Gegenstand weiterer Unteransprüche.

Weitere Ausführungsformen und Vorteile der Erfindung werden im Folgenden an einem bevorzugten Ausführungsbeispiel anhand schematischer Darstellungen näher erläutert. Dabei zeigen
- Figur 1:: schematisch eine Schrägansicht eines zylinderförmigen Werkstücks zusammen mit einer erfindungsgemäßen Ablegevorrichtung und
- Figur 2:: schematisch einen Seitenansicht auf ein unregelmäßig geformtes Werkstück zusammen mit einer erfindungsgemäßen Ablegevorrichtung.

In den Figuren tragen gleiche konstruktive Elemente die gleichen Bezugsziffern.

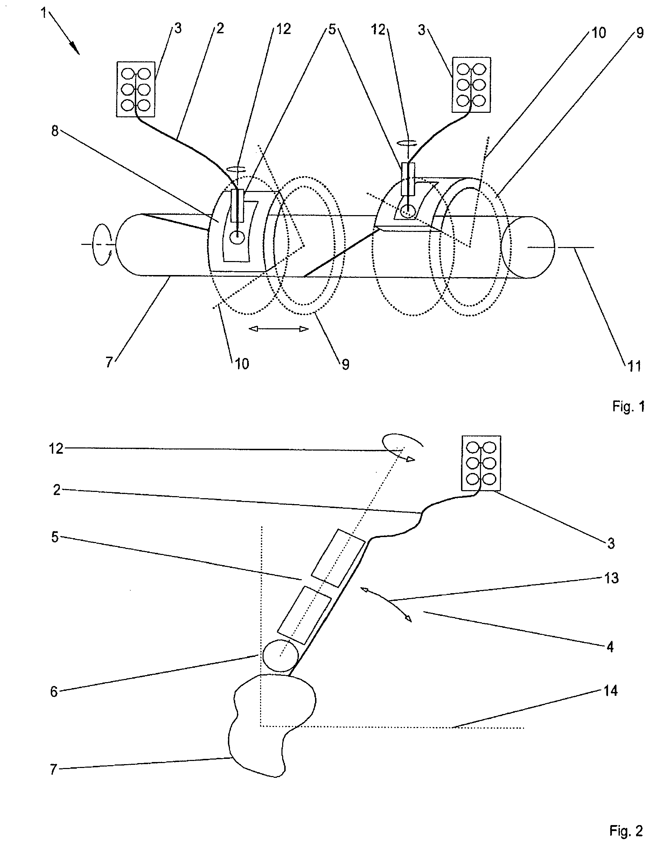

Figur 1 zeigt eine erfindungsgemäße Ablegevorrichtung 1 zur Ablage von Fasergebilden 2, insbesondere aus Kohlenstofffasern, die mit einer Kunststoffmatrix versehen sind. Diese kann ein thermoplastisches oder duroplastisches Kunststoffmaterial enthalten. Die Materialzuführung 3 der Fasergebilde 2, die in Fig. 1 schematisch als Faserband aus mehreren Rovings dargestellt sind, erfolgen in Fig. 1 und Fig. 2 von einem Gatter. Alternativ kann die Materialzuführung 3, insbesondere von Endlosfasermaterial, auch als externe Materialzuführung erfolgen.

Über ein Führungssystem 4 werden die Fasergebilde zu den Legeköpfen 5 geführt, die die Fasergebilde 2 über Legerollen 6 auf dem Werkstück 7 ablegen. Die Legeköpfe 5 sind auf Stützelementen 8 angeordnet, die auf einer mit gestrichelten Linien angedeuteten ringförmigen Bahn 9 in Umfangsrichtung um das Werkstück 7 beweglich gelagert sind. In diesem Ausführungsbeispiel sind die Stützelemente 8 als Ringsegmente ausgebildet. Diese sind besonders einfach auf der ringförmigen Bahn 9 bewegbar. Der Winkel 10, den die Ringsegmente 8 einnehmen, ist mit fein gestrichelten Linien angedeutet. Beträgt der Winkel 10 beispielweise 60°, kann eine Anzahl von sechs Ringsegmenten 8 derart angeordnet werden, dass sie einen kompletten Ring bilden. Dieser geschlossene Ring könnte zumindest reversibel fixiert werden, so dass die Ringsegmente zumindest zeitweise lediglich gemeinsam in Umfangsrichtung bewegbar angeordnet sind. Durch Lösen der sechs Ringsegmente 8 können sie wieder in Längsrichtung des Werkstücks 7 beweglich angeordnet sein. Es ist auch denkbar, dass mehrere geschlossene Ringe aus Ringsegmenten 8 um das Werkstück 7 angeordnet sind.

Die in Fig. 1 dargestellten Stützelemente 8 sind relativ zueinander und relativ zum Werkstück 7 sowohl in Umfangsrichtung als auch in Längsrichtung des Werkstücks 7 beweglich angeordnet. Zusätzlich oder alternativ kann das Werkstück 7 um eine Rotationsachse 11 drehbar gelagert sein, sowie in Längsrichtung verschieblich gelagert sein.
Auch die Legeköpfe 5 selbst können auf den Stützelementen 8 entlang einer Rotationsachse 12 beweglich gelagert sein. Diese ermöglicht einen weiteren Freiheitsgrad bei der Ablage der Fasergebilde 2. Bezüglich der Stützelemente 8 sind die Legeköpfe 5 innerhalb eines Winkels 13 schwenkbar gelagert. Dieser Winkel 13 ist in Fig. 2 beispielhaft als 90°-Winkel 14 angedeutet. Eine derartige Schwenkbarkeit verbessert das Ablegeverhalten insbesondere auf einem unregelmäßig geformten Werkstück 7, wie es in Fig. 2 schematisch angedeutet ist. Des Weiteren sind in diesem Ausführungsbeispiel alle Stützelemente mit Linearführungen versehen. Diese ermöglichen eine im Wesentlichen reibungsfreie Translation der Legeköpfe 5 auf den Stützelementen.

Eine nicht dargestellte Schneidvorrichtung an den Legeköpfen 5 ermöglicht Dickensprünge.

Die Stützelemente sind in eine Nicht-Betriebsstellung fahrbar, in der sie direkt gewartet und/oder entnommen und dann gewartet werden können. Dabei kann der Fertigungsprozess vorteilhaft weitergeführt werden. Somit lassen sich geringe Ausfallzeiten erzielen.
In einer Variante des Ausführungsbeispiels (nicht dargestellt) bilden beispielsweise vier Ringsegmente 8 ein Array, das derart angesteuert werden kann, dass sich eine Flechtablage nachbilden und ein Kreuzmuster aus Rovings fertigen lässt.

### Bezugszeichenliste

- 1: Ablegevorrichtung
- 2: Fasergebilde, Faserband, Roving
- 3: Materialzuführung, Gatter
- 4: Führungssystem
- 5: Legekopf
- 6: Legerolle
- 7: Werkstück
- 8: Stützelement, Ringsegment
- 9: ringförmige Bahn
- 10: Winkel
- 11: Rotationsachse
- 12: Rotationsachse
- 13: Winkel
- 14: 90°-Winkel

## Patentansprüche

1. Ablegevorrichtung (1) zur automatisierten Ablage von Fasergebilden (2) auf einem Werkstück (7), aufweisend eine Mehrzahl von Stützelementen (8) mit jeweils zumindest einem Legekopf (5), wobei der zumindest eine Legekopf (5) ausgebildet ist, Fasergebilde (2) auf dem Werkstück (7) abzulegen, und wobei die Mehrzahl von Stützelementen (8) jeweils auf einer ringförmigen Bahn (9) in einer Umfangsrichtung um das Werkstück (7) und in einer Längsrichtung des Werkstücks (7) relativ zueinander beweglich angeordnet sind.

2. Ablegevorrichtung nach Anspruch 1, **dadurch gekennzeichnet, dass** die Mehrzahl von Stützelementen (8) eine Mehrzahl von Ringsegmenten ist.

3. Ablegevorrichtung nach Anspruch 1 oder 2, **dadurch gekennzeichnet, dass** die Mehrzahl von Stützelementen (8) eine Mehrzahl von Linearführungen aufweist, insbesondere aus diesen besteht.

4. Ablegevorrichtung nach zumindest einem der vorhergehenden Ansprüche, **dadurch gekennzeichnet, dass** die Mehrzahl von Stützelementen (8) zumindest teilweise relativ zueinander in Längsrichtung und/oder in Umfangsrichtung des Werkstücks (7) beweglich gelagert ist.

5. Ablegevorrichtung nach zumindest einem der vorhergehenden Ansprüche, **dadurch gekennzeichnet, dass** zumindest ein Teil der Mehrzahl von Stützelementen (8) ringförmig um das Werkstück (7) angeordnet ist.

6. Ablegevorrichtung nach zumindest einem der vorhergehenden Ansprüche, **dadurch gekennzeichnet, dass** zumindest ein Teil der Legeköpfe (5) auf zumindest einem Teil der Stützelemente (8) bezüglich eines Winkels (13) radial zum Werkstück (7) schwenkbar gelagert ist.

7. Ablegevorrichtung nach zumindest einem der vorhergehenden Ansprüche, **dadurch gekennzeichnet, dass** zumindest ein Legekopf (5) derart ausgeführt ist, dass er gleichzeitig mehrere Fasergebilde (2) auf dem Werkstück (7) ablegen kann.

8. Ablegevorrichtung nach zumindest einem der vorhergehenden Ansprüche, **dadurch gekennzeichnet, dass** zumindest ein Teil der Stützelemente (8) ein Array bildet.

9. Ablegevorrichtung nach zumindest einem der vorhergehenden Ansprüche, **dadurch gekennzeichnet, dass** eine Mehrzahl von Legeköpfen (5) unabhängig voneinander ansteuerbar ist.

10. Ablegevorrichtung nach zumindest einem der vorhergehenden Ansprüche, **dadurch gekennzeichnet, dass** zumindest ein Teil der Legeköpfe (5) eine Schneidvorrichtung aufweist.

11. Ablegevorrichtung nach zumindest einem der vorhergehenden Ansprüche, **dadurch gekennzeichnet, dass** zumindest ein Teil der Legeköpfe (5) und/oder zumindest ein Teil der der Stützelemente (8) eine Materialzuführung (3) zur Zuführung von Fasermaterial, insbesondere von Endlosfasermaterial, aufweist.

12. Ablegevorrichtung nach Anspruch 11, **dadurch gekennzeichnet, dass** die Materialzuführung (3) eine externe Materialzuführung ist und/oder von einem Gatter stammt.

13. Ablegevorrichtung nach zumindest einem der vorhergehenden Ansprüche, **dadurch gekennzeichnet, dass** das Werkstück (7) in Längsrichtung und/oder Umfangsrichtung beweglich gelagert ist.

14. Ablegevorrichtung nach zumindest einem der vorhergehenden Ansprüche, **dadurch gekennzeichnet, dass** zumindest ein Teil der Stützelemente (8) derart gelagert ist, dass er individuell entnommen werden kann.

15. Ablegevorrichtung nach zumindest einem der vorhergehenden Ansprüche, **dadurch gekennzeichnet, dass** zumindest ein Teil der Stützelemente (8) in eine Nicht-Betriebsstellung fahrbar ist.

## Claims

1. Placement device (1) for the automatic depositing of fibre structures (2) on a workpiece (7), having a plurality of support elements (8) with respectively at least one placement head (5), said at least one placement head (5) being provided to deposit fibre structures (2) on the workpiece (7), and the plurality of support elements (8) respectively being disposed on an annular path (9) in a peripheral direction around the workpiece (7) and being displaceable relative to one another in a longitudinal direction of the workpiece (7).

2. Placement device according to claim 1, **characterised in that** the plurality of support elements (8) is a plurality of ring segments.

3. Placement device according to claim 1 or claim 2, **characterised in that** the plurality of support elements (8) has a plurality of linear tracks, and in particular consists of said linear tracks.

4. Placement device according to at least one of the preceding claims, **characterised in that** the plurality of support elements (8) is supported displaceably, at least partially in respect of one another, in the longitudinal direction and/or in the peripheral direction of the workpiece (7).

5. Placement device according to at least one of the preceding claims, **characterised in that** at least one portion of the plurality of support elements (8) is arranged in an annular manner around the workpiece (7).

6. Placement device according to at least one of the preceding claims, **characterised in that** at least one portion of the placement heads (5) on at least one portion of the support elements (8) is supported pivotably by reference to an angle (13) radial to the workpiece (7).

7. Placement device according to at least one of the preceding claims, **characterised in that** at least one placement head (5) is constructed such that it can deposit a plurality of fibre structures (2) on the workpiece (7) simultaneously.

8. Placement device according to at least one of the preceding claims, **characterised in that** at least one portion of the support elements (8) forms an array.

9. Placement device according to at least one of the preceding claims, **characterised in that** a plurality of placement heads (5) is controllable independently of one another.

10. Placement device according to at least one of the preceding claims, **characterised in that** at least one portion of the placement heads (5) has a cutting device.

11. Placement device according to at least one of the preceding claims, **characterised in that** at least one portion of the placement heads (5) and/or at least one portion of the support elements (8) has a material feed (3) for feeding fibre material, in particular continuous fibre material.

12. Placement device according to claim 11, **characterised in that** the material feed (3) is an external material feed and/or originates from a creel.

13. Placement device according to at least one of the preceding claims, **characterised in that** the workpiece (7) is supported displaceably in the longitudinal direction and/or peripheral direction.

14. Placement device according to at least one of the preceding claims, **characterised in that** at least one portion of the support elements (8) is supported such that it can be removed individually.

15. Placement device according to at least one of the preceding claims, **characterised in that** at least one portion of the support elements (8) can be driven into a non-operating position.

## Revendications

1. Dispositif de dépôt (1) pour déposer automatiquement des ensembles de fils (2) sur une pièce d'usinage (7), présentant une pluralité d'éléments d'appui (8) ayant respectivement au moins une tête de pose (5), dans lequel l'au moins une tête de pose (5) est conçue pour déposer des ensembles de fils (2) sur la pièce d'usinage (7), et dans lequel la pluralité d'éléments d'appui (8) sont disposés mobiles les uns par rapport aux autres respectivement sur un trajet annulaire (9) selon une direction circonférentielle autour de la pièce d'usinage (7) et selon une direction longitudinale de la pièce d'usinage (7).

2. Dispositif de dépôt selon la revendication 1, **caractérisé en ce que** la pluralité d'éléments d'appui (8) est une pluralité de segments annulaires.

3. Dispositif de dépôt selon la revendication 1 ou 2, **caractérisé en ce que** la pluralité d'éléments d'appui (8) présente une pluralité de guidages linéaires, et en particulier est composée de ceux-ci.

4. Dispositif de dépôt selon au moins une des revendications précédentes, **caractérisé en ce que** la pluralité d'éléments d'appui (8) sont montés mobiles au moins partiellement les uns par rapport aux autres selon la direction longitudinale et/ou selon la direction circonférentielle de la pièce d'usinage (7).

5. Dispositif de dépôt selon au moins une des revendications précédentes, **caractérisé en ce qu'**au moins une partie de la pluralité d'éléments d'appui (8) est disposée de manière annulaire autour de la pièce d'usinage (7).

6. Dispositif de dépôt selon au moins une des revendications précédentes, **caractérisé en ce qu'**au moins une partie des têtes de pose (5) est montée pivotante sur au moins une partie des éléments d'appui (8) par rapport à un angle (13) radialement vis-à-vis de la pièce d'usinage (7).

7. Dispositif de dépôt selon au moins une des revendications précédentes, **caractérisé en ce qu'**au moins une tête de pose (5) est configurée de telle sorte qu'elle peut déposer simultanément plusieurs ensembles de fils (2) sur la pièce d'usinage (7).

8. Dispositif de dépôt selon au moins une des revendications précédentes, **caractérisé en ce qu'**au moins une partie des éléments d'appui (8) forme une matrice.

9. Dispositif de dépôt selon au moins une des revendications précédentes, **caractérisé en ce qu'**une pluralité de têtes de pose (5) sont commandables de manière indépendante les unes des autres.

10. Dispositif de dépôt selon au moins une des revendications précédentes, **caractérisé en ce qu'**au moins une partie des têtes de pose (5) présente un moyen de découpe.

11. Dispositif de dépôt selon au moins une des revendications précédentes, **caractérisé en ce qu'**au moins une partie des têtes de pose (5) et/ou au moins une partie des éléments d'appui (8) présente une amenée de matériau (3) pour amener le matériau filaire, en particulier le matériau de fil sans fin.

12. Dispositif de dépôt selon la revendication 11, **caractérisé en ce que** l'amenée de matériau (3) est une amenée de matériau externe et/ou provient d'une porte.

13. Dispositif de dépôt selon au moins une des revendications précédentes, **caractérisé en ce que** la pièce d'usinage (7) est montée mobile selon la direction longitudinale et/ou la direction circonférentielle.

14. Dispositif de dépôt selon au moins une des revendications précédentes, **caractérisé en ce qu'**au moins une partie des éléments d'appui (8) est montée mobile de telle sorte qu'ils peuvent être prélevés de manière individuelle.

15. Dispositif de dépôt selon au moins une des revendications précédentes, **caractérisé en ce qu'**au moins une partie des éléments d'appui (8) peuvent être dirigés dans une position de non-fonctionnement.
